# EUROPEAN PATENT APPLICATION

(11) **EP 2 942 278 A1**
(43) Date of publication of application: **11.11.2015**
(21) Application number: 14275101.5
(22) Date of filing: 07.05.2014
(51) Int. Cl.: B64D 37/06, B64D 37/32, B60K 15/03, F41H 5/04

(54) **Liquid storage system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a liquid storage system comprising a tank (16) containing a liquid and a deformable tank liner (18) disposed on and covering at least part of at least one internal surface of the tank (16). The tank liner (18) is configured not to deform under maximum and minimum hydrostatic pressures of the liquid in the tank (16). The tank liner (18) is configured to deform under a pressure greater than the maximum hydrostatic pressure of the liquid in the tank (16). The tank liner (18) may comprise a layer of compressible material (18a), for example a solid carbon foam, which is configured not to deform under maximum and minimum hydrostatic pressures of the liquid in the tank (16) and is configured to deform under a pressure greater than the maximum hydrostatic pressure of the liquid in the tank (16).

## Description

### FIELD OF THE INVENTION

The present invention relates to liquid storage systems.

### BACKGROUND

A high speed projectile on impact with and penetration into a liquid containing tank generates very high pressure in the liquid. This phenomenon, known as hydrodynamic ram, typically includes the generation of shock waves and subsequent pressure pulses in the liquid. These pressures, combined with the penetration damage from the projectile, can cause damage to the tank structure and frequently are the cause of catastrophic failure of the tank. The hydrodynamic ram pressure pulses are intense but of short duration which propagate through the liquid in the tank.

There is thus a need for means for reducing hydrodynamic ram pressure in the liquid in such a tank and for a generally improved tank which has an improved ability to sustain projectile impact without catastrophic failure.

### SUMMARY OF THE INVENTION

In a first aspect, the present invention provides a liquid storage system comprising a tank containing a liquid and a deformable tank liner disposed on and covering at least part of at least one internal surface of the tank. The tank liner is configured not to deform under maximum and minimum hydrostatic pressures of the liquid in the tank. Also, the tank liner is configured to deform under a pressure greater than the maximum hydrostatic pressure of the liquid in the tank.

The tank liner may comprise a layer of compressible material. The compressible material may be configured not to deform under maximum and minimum hydrostatic pressures of the liquid in the tank. The compressible material may be configured to deform under a pressure greater than the maximum hydrostatic pressure of the liquid in the tank. Preferably, the compressible material is a solid.

The compressible material may have a lower density than the liquid in the tank.

The compressible material may be closed cell foam. Alternatively, the compressible material may be open cell foam. Alternatively, the compressible material may comprise open and closed cell foams.

The compressible material may be solid carbon foam.

The tank liner may comprise a further layer of material, the further layer being made of a different material to the layer of compressible material also being disposed on the layer of compressible material such that the layer of compressible material is sandwiched between the further layer and the internal surface of the tank.

The further layer may be a non-permeable material such that the compressible material is isolated by the further layer from the liquid in the tank.

The further layer may be made of a stretchable material.

The tank liner may comprise one or more chambers having chamber walls, the chamber walls being sufficiently strong to not deform when subjected to the maximum and minimum hydrostatic pressures of the liquid in the tank, and the chamber walls being configured to deform when subjected to a pressure greater than the maximum hydrostatic pressure of the liquid in the tank so as to allow a shock wave or waves in the liquid in the tank resulting from compression of the liquid by impact of a projectile on the liquid storage system to be reduced by expansion of the compressed liquid into one or more of the chambers.

The total cavity volume of the tank liner in the tank may be less than or equal to 15% by volume of the tank volume.

The tank may be an aircraft fuel tank (for example, located in a wing of an aircraft).

In a further aspect, the present invention provides a vehicle comprising a liquid storage system for containing a liquid, the liquid storage system being in accordance with any of the above aspects.

The vehicle may be an aircraft. The tank may be an aircraft fuel tank. The tank liner may be configured not to deform under maximum and minimum hydrostatic pressures of the liquid in the tank at least up to maximum aircraft manoeuvre rate.

In a further aspect, the present invention provides a deformable tank liner for disposing across an internal surface of a tank containing liquid. The tank liner is configured not to deform under maximum and minimum hydrostatic pressures of the liquid in the tank. Also, the tank liner is configured to deform under a pressure greater than the maximum hydrostatic pressure of the liquid in the tank.

The tank liner may comprise a layer of compressible material, the compressible material being configured not to deform under maximum and minimum hydrostatic pressures of the liquid in the tank, and configured to deform under a pressure greater than the maximum hydrostatic pressure of the liquid in the tank.

The tank liner may further comprise a further layer disposed across a surface of the layer of compressible material, the further layer being made of a different material to the layer of compressible material. The further layer may be a non-permeable material such that the compressible material is isolated by the further layer from the liquid in the tank. The further layer may be made of a stretchable material.

The tank liner may further comprise means for attaching the layer of compressible material to an internal surface of the tank.

The tank liner may comprise one or more chambers having chamber walls. The chamber walls may be sufficiently strong to not deform when subjected to the maximum and minimum hydrostatic pressures of the liquid in the tank, and the chamber walls may be configured to deform when subjected to a pressure greater than the maximum hydrostatic pressure of the liquid in the tank so as to allow a shock wave or waves in the liquid in the tank resulting from compression of the liquid by impact of a projectile on the liquid storage system to be reduced by expansion of the compressed liquid into one or more of the chambers.

In a further aspect, the present invention provides a method of providing a liquid storage system, the method comprising: providing a tank for containing a liquid; providing a deformable tank liner, the tank liner being in accordance with the preceding aspect; attaching the tank liner to the tank such that the tank liner covers at least part of at least one internal surface of the tank; and at least partially filling the tank with a liquid.

### BRIEF DESCRIPTION OF THE DRAWINGS

Figure 1 is a schematic illustration (not to scale) of an exploded view of an example aircraft wing in which is located a fuel tank;
Figure 2 is a schematic illustration (not to scale) showing a cross section through the fuel tank;
Figure 3 is a schematic illustration (not to scale) showing a portion of a fuel tank liner; and
Figure 4 is a schematic illustration (not to scale) illustrating effects of a projectile impacting with an external surface of the fuel tank.

### DETAILED DESCRIPTION

In the following description, like reference numerals refer to like elements.

The following description is based on embodiments of the invention and should not be taken as limiting the invention with regard to alternative embodiments that are not explicitly described herein. Structural material types and methods of construction identified are examples only.

It will be appreciated that relative terms such as top and bottom, upper and lower, and so on, are used merely for ease of reference to the Figures, and these terms are not limiting as such, and any two differing directions or positions and so on may be implemented.

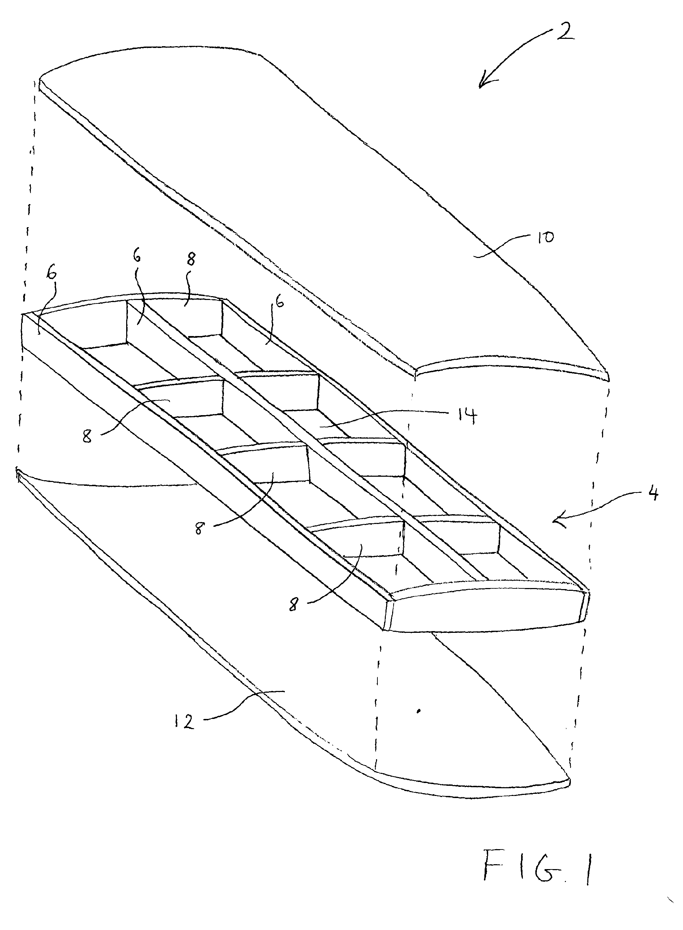

Figure 1 is a schematic illustration (not to scale) of an exploded view of an example aircraft wing 2 in which an embodiment of a fuel tank liner is implemented.

The aircraft wing 2 comprises a substructure 4 comprising a plurality of spars 6 and ribs 8. The spars 6 are spaced apart from one another and are aligned along the length of the aircraft wing 2. The spars 6 are coupled together by the spaced apart ribs 8 which are substantially perpendicular to the spars 6. The spars 6 and ribs 8 are connected together by fasteners (not shown in the Figures). The spars 6 and ribs 8 are made of carbon fibre composite (CFC) material, i.e. a composite material comprising a polymer matrix reinforced with carbon fibres. In other examples, the spars 6 and ribs 8 are made of a different appropriate material, for example, aluminium.

The aircraft wing 2 further comprises external skins, namely an upper skin 10 and a lower skin 12. The upper skin 10 comprises a plurality of panels made of CFC material. The upper skin 10 is attached to an upper surface of the substructure 4 by fasteners (not shown in the Figures). The lower skin 12 comprises a plurality of panels made of CFC material. The lower skin 12 is attached to a lower surface of the substructure 4 by fasteners (not shown in the Figures). The external skin 10, 12 may each be, for example, 8mm thick.

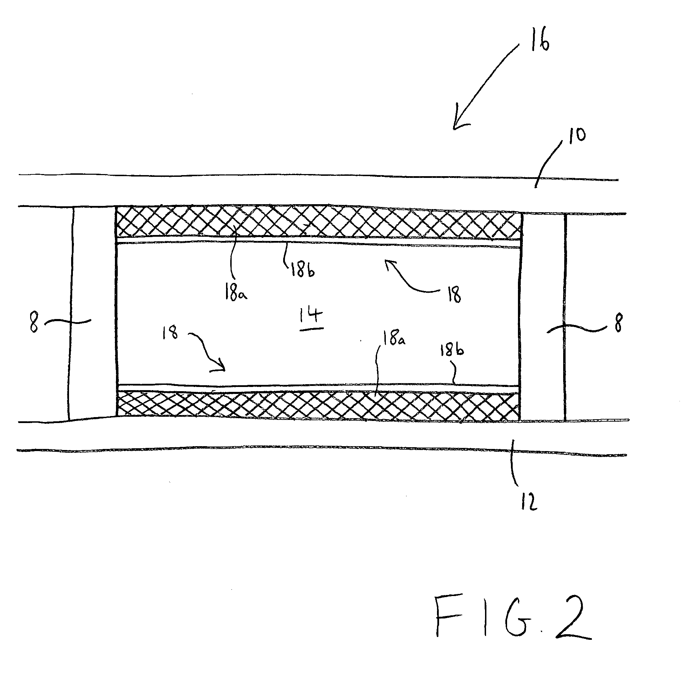

When the substructure 4 and the external skins 10, 12 are attached together (and, for example, bonded with a sealant), a cavity defined by the substructure 4 and skins 10, 12 is formed. Such a cavity is used as a fuel tank for storing aircraft fuel and is indicated in Figure 1 by the reference numeral 14. The fuel tank is described in more detail later below with reference to Figure 2.

The aircraft wing 2 further comprises a leading edge structure, a trailing edge structure and a wing tip structure, which are not shown in Figure 1 for reasons of clarity.

Figure 2 is a schematic illustration (not to scale) showing a cross section through the fuel tank 16 in the aircraft wing 2.

In this embodiment, the outer walls of the fuel tank 16 are provided by spars 6, ribs 8, and the upper and lower skins 10, 12. Aircraft fuel is stored in the cavity 14 defined by the fuel tank outer walls.

In this embodiment, the fuel tank 16 comprises two fuel tank liners 18. A first of the fuel tank liners 18 is disposed on an internal surface of the upper skin 10, i.e. the surface of the upper skin 10 that is inside the fuel tank 16. A second of the fuel tank liners 18 is disposed on an internal surface of the lower skin 12, i.e. the surface of the lower skin 12 that is inside the fuel tank 16.

Preferably, the fuel tank liners 18 cover the entirety of the internal surfaces of the external skins 10, 12 that define the fuel tank 16. Further, the fuel tank liners 18 may also cover the surfaces of the ribs 8 or spars 6.

In this embodiment, each fuel tank liner 18 comprises a first layer 18a and a second layer 18b.

The first layer 18a of each the tank liners 18 is attached to an internal surface of a respective outer skin 10, 12. The first layers 18a may be attached to the outer skins 10, 12 using any appropriate attachment means, for example, using an adhesive.

In this embodiment, the first layers 18a are made of a solid carbon foam, in other embodiments, alternative energy absorbing materials are used instead of or in addition to the solid carbon foam.

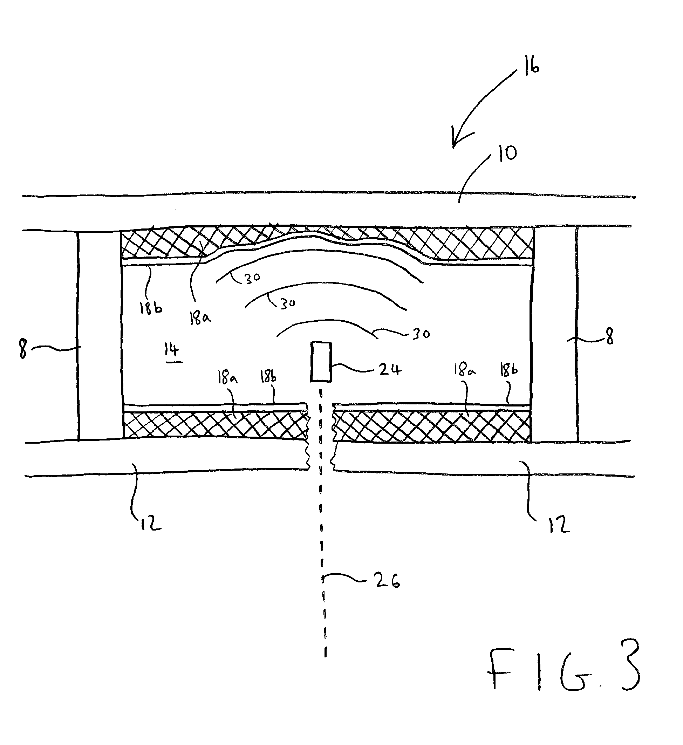

The solid carbon foam is less dense than the fluid that is stored in the fuel tank 16 (i.e. aircraft fuel). The first layers 18a are monolithic. The first layers 18a are sufficiently strong to withstand the maximum and minimum hydrostatic pressure of the liquid in the fuel tank 16 at least up to maximum aircraft manoeuvre rate. Nevertheless, the first layers 18a are configured to deform in the event that the fuel tank 16 is impacted by a projectile, as described in more detail later below with reference to Figure 3.

In this embodiment, the solid carbon foam is a ridged closed-cell structural foam having a small cell size. Preferably, the closed cell structure of the foam layer is such that permeation of foam layer by the fluid in the fuel tank 16 (i.e. the aircraft fuel) is opposed or prevented. One example of appropriate solid carbon foam is CFOAM (TM). In some embodiments, the carbon foam may have an open-cell structure.

Advantageously, the solid carbon foam layer has a high compressive strength and significant impact absorption capacity suited to absorbing hydrodynamic ram loading. Furthermore, the solid carbon foam tends to provide thermal and electromagnetic insulation to the fuel in the fuel tank 16.

The thickness of the first layers 18a (i.e. the distance between the surface of a first layer 18a that is attached to an outer skin 10, 12 and the surface of that first layer 18a that is attached to a second layer 18b) is typically in the range 10mm-50mm.

For each tank liner 18, the second layer 18b of that tank liner 18 is attached to the surface of the first layer 18a of that tank liner 18 that is opposite to the surface of that first layer 18a that is attached to an outer skin 10, 12. Thus, each first layer 18a is sandwiched between a respective second layer 18b and a respective outer skin 10, 12. The second layers 18b may be attached to the first layers 18a using any appropriate attachment means, for example, using an adhesive.

In this embodiment, the second layers 18b are made of a non-permeable material such as plastic. Thus, the second layers 18b substantially isolate the first layers 18a from the fluid within the fuel tank cavity 14. In this embodiment, the second layers 18b are flexible and configured to stretch at least to some degree. The second layers 18b are non-reactive with the fluid in the fuel tank cavity 14.

Advantageously, the second layers 18b prevent or oppose aircraft fuel within the fuel tank 16 permeating into the first layers 18a (i.e. the foam material). This advantageously tends to prevent the transmission of hydrodynamic ram pressures to the outer skins 10,12.

The thickness of the second layers 18b (i.e. the distance between the surface of a second layer 18b that is attached to a first layer 18a and the surface of that second layer 18b that is in contact with the fluid in the fuel tank 16) is typically in the range of 0.5 to 5mm.

Preferably, the dimensions of the fuel tank liners 18 are such that the fuel tank liners 18 occupy less than or equal to 15% (e.g. approximately 10%) of the fuel tank capacity. In other embodiments, the fuel tank liners 18 are a different thickness that provides that the fuel tank liners 18 occupy a different proportion of the fuel tank capacity.

As will now be described in more detail, the fuel tank liners 18 are operable to reduce hydrodynamic ram damage to the fuel tank 16 resulting from impact of a projectile with an external surface of the fuel tank 16.

Figure 3 is a schematic illustration (not to scale) illustrating effects of a projectile 24 impacting with the lower skin 12 of the fuel tank 16. The path of the projectile 24 through the lower skin 12 is indicated in Figure 3 by the reference numeral 26.

The projectile 24 may be any appropriate projectile or foreign object such as a bullet, warhead fragment, a vehicle part, a rock, a maintenance tool, hail, ice, a bolt, etc. An example projectile has a weight of approximately 3.5g, is substantially spherical in shape having a diameter of approximately 9.5mm, and travels with a velocity of 1500m/s. A further example projectile is a 44g 12.5mm bullet that travels with a velocity of 500m/s.

In this example, the projectile 24 initially impacts with an external surface of the lower skin 12 and travels through the lower skin 12. The projectile 24 causes high strain rate shear damage to the lower skin 12 resulting in a hole in the lower skin 12 approximately the size of the projectile 24.

After passing through the lower skin 12, the projectile 24 impacts with the fuel tank liner 18 disposed on the lower skin 12.

The projectile 24 impacting with the fuel tank liner 18 disposed on the lower skin 12 tends to retard the passage of the projectile 24 into the fuel tank 16. Impact kinetic energy of the projectile 24 tends to be absorbed at least to some extent by the fuel tank liner 18.

In this example, the projectile 24 travels through fuel tank liner 18 disposed on the lower skin 12. The projectile 24 causes high strain rate shear damage to that fuel tank liner 18 resulting in a hole in that fuel tank liner 18 approximately the size of the projectile 24. In addition, there may be some break-up of the solid foam in the region proximate to the hole. Impact kinetic energy of the projectile 24 tends to be used to penetrate (and in some cases break-up) the fuel tank liner 18 disposed on the lower skin 12, thereby reducing the energy introduced into the fluid directly by the projectile 24. In some examples, the projectile 24 does not fully penetrate the fuel tank liner 18 disposed on the lower skin 12 and the projectile 24 is prevented from travelling further into the fuel tank 16, thereby reducing the energy at least cavitation pressure caused by the projectile 24.

In this example, after travelling through the fuel tank liner 18 disposed on the lower skin 12, the projectile 24 impacts with the fluid within the fuel tank 16. The impacting projectile 24 tends to generate one or more high pressure shock waves 30 within the fluid in the fuel tank 16. These shock waves 30 tend to be of lower energy than a shock wave or shock waves experienced in a conventional system due to at least some of the impact energy of the projectile 24 being absorbed by the fuel tank liner 18 disposed on the lower skin 12.

In this example, the shock waves 30 travel through the fluid in the fuel and impinge upon the fuel tank liner 18 disposed on the upper skin 10. Advantageously, the fuel tank liner 18 disposed on the upper skin 10 tends to reduce the hydraulic ram pressure experienced by the upper skin 10. This tends to be achieved in at least two ways. Firstly, energy from the hydraulic ram shock wave 30 is absorbed by expansion of the liquid into the space created by irreversible compression of the fuel tank liner 18 disposed on the upper skin 10. Secondly, due to the large shock impedance mismatch between the first layers 18a and the liquid in the fuel tank 16, the fuel tank liners 18 tend to behave as good shock wave reflectors and poor shock wave transmitters. Thus, through shock wave reflections in the fuel tank 16 and the attenuation properties of the liquid, the shock wave amplitude tends to be reduced and consequently the pressure experienced by the substructure 4 is diminished.

In some examples, the second layer 18b of the fuel tank liner 18 disposed on the upper skin 10 tends to be sufficiently stretchable to allow the first layer 18a to deform whilst, at the same time, maintaining a non-permeable layer between the cavity 14 and the first layer 18a. In other examples, one or more holes through the second layer 18b of a fuel tank liner 18 is may be formed e.g. by impinging shockwaves 30. Such holes may allow the fluid in the fuel tank 16 to flow into the carbon foam that is the first layer 18a. This increased volume in which the fluid may flow advantageously tends to reduce the pressure within the liquid, thereby reducing the pressure experienced by the substructure 4.

Advantageously, the fuel tank liners 18 are positioned in the fuel tank 16 such that a shock pulse generated by a projectile impacting a tank wall will impinge on at least one fuel tank liner 18 before impinging upon an opposing tank wall.

In this example, as the projectile 24 passes through the fluid in the fuel tank 16, a cavitation "wake" may form behind the projectile 24, i.e. a region of low pressure (e.g. a vapour or a vacuum) may form in the wake of the projectile 24. This causes a fluid displacement and an increase in the pressure of the fluid in the fuel tank 16. Due to the passage of the projectile 24 through the fuel tank 16 being retarded at least to some degree by the fuel tank liner 18 disposed on the lower skin 12, the increased fluid pressure resulting from cavitation caused by the projectile 24 tends to be decreased compared to conventional systems. Thus, pressures resulting from cavitation exerted on the walls of the fuel tank 16 tend to be lower than in conventional systems. Thus, the likelihood of damage to the walls of the fuels tank 16 (e.g. decoupling of the external skin 10, 12 from the spars 6 or ribs 8) tends to be reduced.

Additionally, the pressure resulting from cavitation caused by the projectile 24 tends to be reduced by expansion of the liquid into the space created by irreversible compression of the fuel tank liners 18. Energy tends to be used to deform or crush the fuel tank liners, thereby reducing the energy transferred to outer walls of the fuel tank 16.

Additionally, were the projectile 24 to continue through the cavity 14 and impact with the fuel tank liner 18 disposed on the upper skin 10, that fuel tank liner 18 would tend to cause further retardation of the projectile 24, thereby further reducing impact energy and reducing the force experienced by at least the upper skin 10.

An advantage provided by the above described fuel tank liner is that hydrodynamic ram damage to a fuel tank caused by an object impacting with an external surface of the fuel tank tends to be reduced or eliminated. Hydrodynamic pressures and their associated structural responses tend to be reduced or eliminated. Thus, the likelihood of catastrophic failure of the fuel tank and corresponding aircraft loss tends to be reduced or eliminated.

The above described fuel tank liner tends to be relative easy and cheap to manufacture.

The above described fuel tank liner tends to be relatively easy to retrofit to existing aircraft fuel tanks.

The above described fuel tank liner tends to provide protection against hydrodynamic ram damage whilst occupying a relatively small amount of the fuel tank's capacity.

The above described fuel tank liner tends to be lightweight.

In the above embodiments, the fuel tank liners are used to line the surfaces of an aircraft wing fuel tank. However, in other embodiments, the fuel tank liners are a different type of liner and may be used to line an internal or surface of a different type of container for containing fluid. In some embodiments, one or more walls of the container may be made of a different material to that described above.

In the above embodiments, fuel tank liners are disposed on the internal surfaces of the upper and lower aircraft skins. However, in other embodiments a fuel tank liner may be disposed on a different surface of the fuel tank instead of or in addition one or both of the internal surfaces of the upper and lower aircraft skins. For example, in some embodiments, all internal surfaces of the fuel tank are covered by fuel tank liners. In some embodiments, a fuel tank liner is only disposed on a single surface of the fuel tank, for example, on only the internal surfaces of the upper aircraft skin.

In the above embodiments, the first layers are made of solid carbon foam. However, in other embodiments, the first layers of a different appropriate material. Preferably, the first layers have a different density to the fluid in the fuel tank. This tends to provide that shockwaves within the fluid that impinge upon the first layer tend to be reflected by the first layer. More preferably, the first layers are less dense than the fluid in the fuel tank. Preferably, the first layers are sufficiently strong to not be deformed by minimum and maximum hydrostatic pressures of the fluid in the fuel tank at least up to maximum aircraft manoeuvre rate. Preferably, the first layers are configured to be deformed by pressures that exceed the maximum hydrostatic pressures of the fluid in the fuel tank at the maximum aircraft manoeuvre rate. This tends to provide that the first layers compress when a shockwave caused by impact of a projectile with the fuel tank impinges upon the first layers.

In the above embodiments, the second layers are made of non-permeable material such as plastic. However, in other embodiments, the second layers may be made of a different material, for example a permeable or semi-permeable material, metal, rubber, or a material comprising aramid or para-aramid fibres. In other embodiments, the fuel tank liners do not include the second layer.

In the above embodiments, the compressible tank liner comprises a layer of compressible material (e.g. solid carbon foam) disposed on an internal surface of the fuel tank. However, in other embodiments, the compressible tank liner has a different construction.

For example, in some embodiments, the tank liner comprises first and second non-permeable liner walls that are spaced apart to define therebetween at least one chamber. The liner walls may be sufficiently rigid and strong to resist the maximum and minimum hydrostatic pressures of a liquid in the tank (e.g. at least up to maximum aircraft manoeuvre rate), but may deform when subjected to a pressure greater than the maximum hydrostatic pressure of the liquid in the tank so as to allow a shock wave or waves in the liquid in the tank resulting from compression of the liquid by impact of a projectile on the liquid storage system to be reduced by expansion of the compressed liquid into one or more of the chambers. In some embodiments, one or more of the chambers contains a material having a different density to the fluid in the fuel tank. In some embodiments, one or more of the chambers contains a gas or vacuum.

Also for example, in some embodiments, the tank liner comprises a non-permeable liner wall that is coupled to a fuel tank wall (e.g. an external skin) such that the liner wall is spaced apart from the fuel tank wall to define at least one chamber between the liner wall and the fuel tank wall. The liner wall may be sufficiently rigid and strong to resist the maximum and minimum hydrostatic pressures of a liquid in the tank (e.g. at least up to maximum aircraft manoeuvre rate), but may deform when subjected to a pressure greater than the maximum hydrostatic pressure of the liquid in the tank so as to allow a shock wave or waves in the liquid in the tank resulting from compression of the liquid by impact of a projectile on the liquid storage system to be reduced by expansion of the compressed liquid into one or more of the chambers. In some embodiments, one or more of the chambers contains a material having a different density to the fluid in the fuel tank. In some embodiments, one or more of the chambers contains a gas or vacuum.

## Claims

1. A liquid storage system comprising:
a tank (16) containing a liquid; and
a deformable tank liner (18) disposed on and covering at least part of at least one internal surface of the tank (16); wherein
the tank liner (18) is configured not to deform under maximum and minimum hydrostatic pressures of the liquid in the tank (16); and
the tank liner (18) is configured to deform under a pressure greater than the maximum hydrostatic pressure of the liquid in the tank (16).

2. A system according to claim 1, wherein
the tank liner (18) comprises a layer of compressible material (18a);
the compressible material (18a) is configured not to deform under maximum and minimum hydrostatic pressures of the liquid in the tank (16); and
the compressible material (18a) is configured to deform under a pressure greater than the maximum hydrostatic pressure of the liquid in the tank (16).

3. A system according to claim 2, wherein the compressible material (18a) has a lower density than the liquid in the tank (16).

4. A system according to claim 2 or 3, wherein the compressible material (18a) is closed or open cell foam.

5. A system according to any of claims 2 to 4, wherein the compressible material (18a) is solid carbon foam.

6. A system according to any of claims 2 to 5, wherein
the tank liner (18) comprises a further layer of material (18b);
the further layer (18b) is made of a different material to the layer of compressible material (18a); and
the further layer (18b) is disposed on the layer of compressible material (18a) such that the layer of compressible material (18a) is sandwiched between the further layer (18b) and the internal surface of the tank (16).

7. A system according to claim 6, wherein the further layer (18b) is a non-permeable material such that the compressible material (18a) is isolated by the further layer (18b) from the liquid in the tank (16).

8. A system according to claim 6 or 7, wherein the further layer (18b) is made of a stretchable material.

9. A system according to any of claims 1 to 8, wherein
the tank liner (18) comprises one or more chambers having chamber walls;
the chamber walls are sufficiently strong to not deform when subjected to the maximum and minimum hydrostatic pressures of the liquid in the tank (16); and
the chamber walls are configured to deform when subjected to a pressure greater than the maximum hydrostatic pressure of the liquid in the tank (16) so as to allow a shock wave or waves (30) in the liquid in the tank (16) resulting from compression of the liquid by impact of a projectile (24) on the liquid storage system to be reduced by expansion of the compressed liquid into one or more of the chambers.

10. A vehicle comprising a liquid storage system for containing a liquid, the liquid storage system being in accordance with any of claims 1 to 9.

11. A vehicle according to claim 10, wherein
the vehicle is an aircraft;
the tank (16) is an aircraft fuel tank; and
the tank liner (18) is configured not to deform under maximum and minimum hydrostatic pressures of the liquid in the tank (16) at least up to maximum aircraft manoeuvre rate.

12. A deformable tank liner (18) for disposing across an internal surface of a tank (16) containing liquid, wherein:
the tank liner (18) is configured not to deform under maximum and minimum hydrostatic pressures of the liquid in the tank (16); and
the tank liner (18) is configured to deform under a pressure greater than the maximum hydrostatic pressure of the liquid in the tank (16).

13. A tank liner according to claim 12, the tank liner (18) comprising:
a layer of compressible material (18a), the compressible material (18a) being configured not to deform under maximum and minimum hydrostatic pressures of the liquid in the tank (16), and configured to deform under a pressure greater than the maximum hydrostatic pressure of the liquid in the tank (16); and
a further layer (18b) disposed across a surface of the layer of compressible material (18a), the further layer (18b) being made of a different material to the layer of compressible material (18a); and
means for attaching the layer of compressible material (18a) to an internal surface of the tank (16).

14. A tank liner according to claim 12, the tank liner (18) comprising:
one or more chambers having chamber walls; wherein
the chamber walls are sufficiently strong to not deform when subjected to the maximum and minimum hydrostatic pressures of the liquid in the tank (16); and
the chamber walls are configured to deform when subjected to a pressure greater than the maximum hydrostatic pressure of the liquid in the tank (16) so as to allow a shock wave or waves (30) in the liquid in the tank resulting from compression of the liquid by impact of a projectile (24) on the liquid storage system to be reduced by expansion of the compressed liquid into one or more of the chambers.

15. A method of providing a liquid storage system, the method comprising:
providing a tank for containing a liquid (16);
providing a deformable tank liner (18), the tank liner (18) being in accordance with any of claims 12 to 14;
attaching the tank liner (18) to the tank (16) such that the tank liner (18) covers at least part of at least one internal surface of the tank (16); and
at least partially filling the tank (16) with a liquid.
